Europäisches Patentamt

European Patent Office

Office européen des brevets

(11) Publication number: **0 141 917**
A1

## EUROPEAN PATENT APPLICATION

(21) Application number: 84109235.6

(22) Date of filing: 03.08.84

(51) Int. Cl.⁴: **B 01 D 53/34**

(30) Priority: 09.08.83 DE 3328653

(43) Date of publication of application: 22.05.85
Bulletin 85/21

(84) Designated Contracting States: **AT BE CH DE FR GB IT LI LU NL SE**

(71) Applicant: **Steuler Industriewerke GmbH, Postfach 1448, D-5410 Höhr-Grenzhausen (DE)**

(72) Inventor: **Sturm, Werner, Baumgartenstrasse 3, D-5431 Bilkheim (DE)**

(74) Representative: **Hemmerich, Friedrich Werner, Patentanwälte HEMMERICH-MÜLLER-GROSSE-POLLMEIER Eduard-Schloemann-Strasse 47, D-4000 Düsseldorf 1 (DE)**

(54) Apparatus for the realization of a process to remove nitrogen oxides from exhaust gases.

(57) An apparatus for the realization of a process for the removal of nitrogen oxides from exaust gases wherein the hot exaust gases are mixed with gaseous ammonia or sprayable liquid ammonia and then brought through a catalyst lattice. In that catalyst lattice the nitrogen oxides with the ammonia are reduced to form gaseous nitrogen and water vapor. The catalyst lattice is made to form a ceramic molecular sieve. The size of the cross - sectional diameter of the passages of that sieve is below the critical diameter of ammonia.

EP 0 141 917 A1

ACTORUM AG

- 1 -

Apparatus for the realization of a process to remove
nitrogen oxides from exhaust gases

This invention refers to an apparatus for the realization
of a process to remove nitrogen oxides from exhaust gases
in that the hot exhaust gases are mixed up with gaseous
ammonia or sprayable liquid ammonia passes through catalyst
lattices, wherein the nitrogen oxides together with the
ammonia are reduced to form gaseous nitrogen and water
vapor.

According to a known process of such type, the hot exhaust
gases containing nitrogen oxides are brought up for continued
handling of them via heat exchangers or after-heaters to a
temperature ranging between 250 and 450°C and mixed with
the gaseous ammonia or sprayable liquid ammonia in a
succeeding mixer to have a volume proportion of 1:1 be
come off. This gas mixture is then directed through a metal
or ceramic lattice of relatively great cross-sectional diameters of passage, the surface of said lattice having been
given a coating of stainless steel catalyst. The nitrogen
oxides and ammonia react due to this catalyst, and the
nitrogen oxides are reduced to form nitrogen and water
vapor and blown off under radiation of the possibly existing excess heat, via the entry side heat exchanger. Control
of the volume of ammonia fed into the mixer is performed
by sensing elements which are to measure either the nitrogen
oxide contents of the entering exhaust gas or the contents
of residual ammonia of the gas leaving the lattice or both
contents altogether and to compare them with the desired
constants.

- 2 -

Although life of the stainless steel coating of the lattice may, according to the working conditions, last for a period of some months or of one year, manufacturing expenditure, prices of stainless steel and, as the case may be, regeneration of the lattice will surely constitute a considerable factor of cost for the estimation of benefits expected to be taken of this process, which will not fail to handicap its application to a large extent.

Moreover, there is a well known process existing which in abandoning the expensive stainless steel coating of the lattices admits that the nitrogen oxides containing exhaust gases are directed through a series of molecular sieves, of which the cross-sectional diameters of passage correspond to the critical molecular diameter of the nitrogen oxides. Therefore, the nitrogen oxides are retained in the molecular sieves, i.e. they are adsorbed, whereas the balance of the exhaust gases having been made free from nitrogen oxides may be blown off subsequently. Upon reaching the limits of its power of adsorption, the section of molecular sieves is switched off and the exhaust gases are bypassed onto a new section of molecular sieves ready to work. Then the switched off section must be blown off by means of hot water vapor, the resulting azotic acid be accumulated for being carried off for further handling. Irrespective of the fact that in the case of the said process azotic acid is produced instead of water and nitrogen, also prejudice will be caused in that first the limited power of adsorption of the molecular sieve section requires several sections of identical type to be arranged one after another in order to ensure continuous operation, in which case the consecutively arranged sections will additionally be charged to adsorb the nitrogen oxides having passed the preceding section and further, in that this process effectively

PATENTANWÄLTE F.W. HEMMERICH · GERD MÜLLER · D. GROSSE · F. POLLMEIER...

0141917

- 3 -

operates only at relatively low temperatures of approx.
40 - 50°C. Therefore, the exhaust gases will in any
case have to be cooled down to the aforesaid temperatures.
The thus appearing heat may, of course, be used for the
preparation of hot vapor for the purpose of cleaning the
sections of molecular sieves, but would as a result build
up a very complex system consisting of numerous changeover control and regulating appliances. Additionally,
residuals of nitric acid will unavoidably remain in the
pores of the molecular sieves so that also these sieves
would have to be renewed from time to time due to the
fact that regeneration of them would not be feasible.

It is the object of the invention to provide an apparatus
for realizing the aforesaid principle of the process to
have the apparatus be capable of ensuring a very long
service life, if uniform removing power and adjustability
of the admixture of ammonia without any use of stainless
steel catalysts prevail.

This task will be solved in that the catalyst lattice has
been made to show a ceramic molecular sieve whose cross-
sectional diameters of passage are of size beneath the
critical molecular diameter of ammonia upto above the
critical molecular diameter of nitrogen and that the surface of the molecular sieve does not show any catalytic
coating.

The so designed apparatus causes the nitrogen oxides and
ammonia to diffuse into the passing through cross-section
of the pores of the molecular sieve so that the aforesaid
reaction will take place in their stress field causing
gaseous nitrogen and water vapor to be generates, which together with the residual gase emerge from the molecular sieve section. An additional and beneficial effect resulting therefrom consists in that the carbon monoxide contained in the exhaust gases oxidizes in the course of the same phase of passage with oxygen to form carbon dioxide and that as a result the carbon monoxide together with nitrogen and water vapor are allowed to be blown off as an innoxious gas.

Considering that the surface of the molecular sieves does not have any catalytic coating, there is also immunity of this surface ensured from catalytic poisons such as sulphur dioxide, carbon dioxide and water and there is nothing that may hinder utilization of these elements in the presence of elevated oxygen concentrations upto 30 Vol./% and more.

The passing through cross-sectional diameters of the molecular sieve may beneficially fluctuate between 2.5 and 4.0 Angström units. Moreover, it will be possible to provide the surface of the sieve with a coating of non-catalytic material in order to improve the properties of low or to affect sizing of the cross-sections of flow.

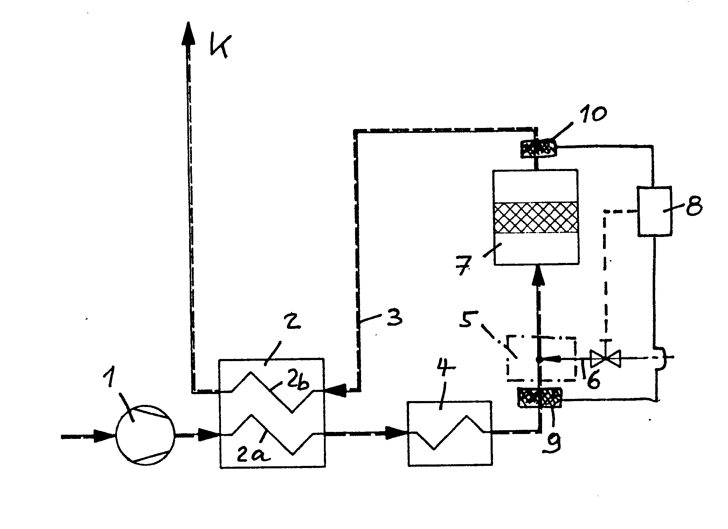

The description hereunder gives more details of the embodiment of the invention as per the drawing attached:

The exhaust gases containing nitrogen oxides are fed via a fan 1 to the primary circuit 2a of a heat exchanger 2, of which the secondary circuit 2b accomodates the exhaust air conduit 3 leading to the stack K. Behind the heat exchanger there is an after-heater 4 located which starts its activity upon demand of the outlet temperature of the exhaust gas coming from the consuming equipment. From the after heater 4 the exhaust gas is supplied to a mixer 5 into which an ammonia supply line is fitted. The gas mixtures leaving the mixer enter the molecular sieve section 7, and the mixture itself consisting of oxygen, nitrogen, water vapor and carbon dioxide, if any, leaving said section is passed through the secondary circuit 2b of the heat exchanger 2 toward the stack K. Proportioning of the ammonia supplied to the mixer is achieved by means of the regulating device 8 which in turn starts working depending on the signals of the sensing element 9 having been arranged ahead of the mixer 5 or of the sensing element 10 arranged behind the molecular sieve section 7 or on the signals emanating from both sensing elements. Object of the sensing element 9 is to evaluate at the same time the share of nitrogen oxides in the exhaust gas, whereas the sensing element 10 evaluates the residual ammonia still existing in the gas mixture which leaves the molecular sieve section 7.

Claims:

1. Apparatus to realize a process for removal of nitrogen oxides from exhaust gases, said process consisting in that the hot exhaust gases are mixed up with gaseous ammonia or sprayable liquid ammonia, then brought through the catalyst lattice, wherein the nitrogen oxides with the ammonia are reduced to form gaseous nitrogen and water vapor
c h a r a c t e r i z e d in that
the catalyst lattice has been made to form a ceramic molecular sieve (7) of which the cross-sectional diameters·of passage are of size below the critical. molecular diameter of ammonia upto above the critical molecular diameter of nitrogen, and that the surface of the molecular sieve does not show any catalytic coating.

2. Apparatus as per claim 1,
c h a r a c t e r i z e d in that
the cross-sectional diameters of passage of the molecular sieve (7) fluctuate between 2.5 and 4.0 Angström units.

3. Apparatus as per claims 1 and/or 2,
c h r a c t e r i z e d in that
the surface of the molecular sieve (7) has a coating of non-catalytic material.

0141917

European Patent
Office

EUROPEAN SEARCH REPORT

. Application number

EP 84 10 9235

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 341 744 (UNITED STATES ATOMIC ENERGY COMMISSION) * Claim 1 * | 1,2 | B 01 D 53/34 |
| A | DE-A-3 000 383 (NORTON CO.) * Claim 1; figure 1 * | 1,2 | |
| A | DE-A-2 912 269 (ENGELHARD MINERALS & CHEMICALS CORP.) * Claims 1,12,14-16,19 * | 1,2 | |

TECHNICAL FIELDS
SEARCHED (Int. Cl.4)

B 01 D 53/00

The present search report has been drawn up for all claims

| Place of search BERLIN | Date of completion of the search 20-12-1984 | Examiner BERTRAM H E H |
|---|---|---|